# EUROPÄISCHE PATENTSCHRIFT

(11) **EP 0 619 862 B1**
(45) Veröffentlichungstag und Bekanntmachung des Hinweises auf die Patenterteilung: **08.01.1997**
(21) Anmeldenummer: 93921812.9
(22) Anmeldetag: 12.10.1993
(51) Int. Cl.: F16F 15/02, F16C 29/06

(54) **DÄMPFUNGSVORRICHTUNG FÜR LINEAR-WÄLZLAGER-FÜHRUNGEN**
DAMPER FOR LINEAR ROLLING BEARING GUIDES
AMORTISSEUR POUR GLISSIERES LINEAIRES A SUPPORT A ROULEMENT

(30) Priorität: 15.10.1992 DE 4234844; 11.12.1992 DE 4241818; 25.06.1993 DE 4321129
(43) Veröffentlichungstag der Anmeldung: 19.10.1994
(73) Patentinhaber: INA Wälzlager Schaeffler KG, 91074 Herzogenaurach (DE)
(72) Erfinder: Santic, Blaz, Dr. Ing., D-86159 Augsburg (DE)
(86) Internationale Anmeldenummer: DE9300961
(87) Internationale Veröffentlichungsnummer: WO9409287

(56) Entgegenhaltungen:
- EP-A- 0 391 072
- DE-A- 4 104 717
- DE-A- 4 121 559
- DE-A- 4 226 608
- FR-A- 1 230 965
- FR-A- 2 032 787
- FR-A- 2 547 227
- US-A- 4 506 935
- N.T.I.S. TECHNICAL NOTES Nr. 6 , Juni 1986 , SPRINGFIELD, VIRGINIA, USA Seiten 693 - 694 LEWIS RESEARCH CENTER 'SQUEEZE-FILM DAMPER CONTROLS HIGH VIBRATIONS'

## Beschreibung

Die Erfindung bezieht sich auf eine Dämpfungsvorrichtung nach dem Oberbegriff des Anspruchs 1.

Um ein Maschinenteil gegenüber einem anderen Maschinenteil beispielsweise entlang einer Führungsschiene präzise und leichtgängig verschieben zu können, wendet man Linear-Wälzlager-Führungen an. Diese haben systembedingt eine im Vergleich zu Linear-Gleit-Führungen geringe Dämpfung. Es können unter gewissen Vorraussetzungen unerwünschte Schwingungen auftreten, die man durch Dämpfung zu reduzieren sucht.

Bei Hochgeschwindigkeits-Werkzeugmaschinen ist es sinnvoll, nur Wälzführungen anzuwenden. Das Problem der Schwingungen ist dort besonders groß. Bei den bekannten Linear-Gleitführungen sind die gefürchteten Stick-Slip-Effekte vorhanden, die eine hochpräzise Steuerung unmöglich machen. Um dieses Problem zu lösen, sind mechanische Reibungsdämpfer bekannt geworden, die mit Federn auf die Wälzkörper wirken. Die dabei erzielte Dämpfung ist in der Regel klein. Dabei erscheinen zwei unerwünschte Nebenwirkungen, nämlich eine verminderte Lebensdauer der Wälzkörper und eine Bremswirkung, die das Positionieren im Zuge normaler Bewegung der Teile behindert.

Es sind weiterhin Problemlösungen mit einer Vorspannung der Linear-Wälzführungsteile bekannt, wobei die Steifigkeit und somit die Frequenz vergrößert und die Amplituden der Schwingungen verringert werden können. Man hat dazu auch schon vorgeschlagen, zwischen der Führungsschiene und dem entlang derselben mittels Wälzkörper geführten Maschinenteil einen auf der Führungsschiene verschiebbaren Gleitschuh vorzusehen, wobei in dem Spalt zwischen dem Gleitschuh und der Führungsschiene eine Dämpfungsflüssigkeit bzw. Schmieröl vorgesehen ist. Die Dämpfung der Schwingungen erfolgt dabei durch Verdrängung der Dämpfungsflüssigkeit (Squeeze-Film-Dämpfung).

Aus technischen Gründen kann hier als Dämpfungsflüssigkeit nur Schmieröl entsprechender Viskosität gewählt werden, welches für Linear-Wälzführungen geeignet ist. Um eine ausreichende Dämpfkraft zu erhalten, ist ein optimaler Spalt (hoher Montageaufwand) erforderlich. Bei zu großem Spalt ist die Dämpfkraft zu klein und die Schwingungsamplitude wird nicht verringert. Bei zu kleinem Spalt erfolgt die Übertragung der Führungskraft auf die Führungsschiene über die Gleitführung der Dämpfungseinrichtung und nicht über die reibungsarme Linear-Wälzlagerung, womit die Vorteile der Linear-Wälzlager-Führung verschwinden. Die Genauigkeit der Vorschubbewegung kann durch eine unkontrollierte Bremswirkung beeinträchtigt werden. Zudem läuft im Betrieb ein Teil der Dämpfungsflüssigkeit aus. Die Führungsschiene, die Wälzkörper, andere Vorrichtungsteile und oft auch die Werkstücke kommen dann mit der Dämpfungsflüssigkeit in Berührung, was unerwünschte Folgen nebst einer Umweltbelastung haben kann. Außerdem muß die ausgelaufene Dämpfungsflüssigkeit ersetzt werden, wenn die Dämpfungswirkung erhalten bleiben soll. Die Dämpfungswirkung dieses Systems kann durch Blasenbildung beeinträchtigt werden.

Aus dem Dokument DE-A-4 104 717 ist eine Dämpfungsvorrichtung der eingangs genannten Art bekannt, bei der ein in dem Dämpfungswagen angeordneter erster Dämpferteil an der Führungsschiene entlanggleitet, so daß ein Gleitlager vorliegt, das jedoch gemäß Spalte 2, Zeile 67, bis Spalte 3, Zeile 5, dieses Dokumentes ersetzt werden kann durch einen Schieber und eine Mehrzahl zwischen diesem und der Führungsschiene angeordneten Kugeln oder Rollen.

Der Erfindung liegt die Aufgabe zugrunde, die unerwünschten Schwingungen an den gegenseitig geführten beweglichen Teilen zu vermeiden, ohne die Nachteile der bekannten Vorrichtungen in Kauf nehmen zu müssen.

Diese Aufgabe wird erfindungsgemäß dadurch gelöst, daß der zweite Dämpferteil von zwei inhaltsgleich großen Hälften des rundum verlaufenden Dämpfungsspaltes vollständig umgeben ist, wobei der erste Dämpferteil mindestens zwei Bohrungen und der zweite Dämpferteil eine gleiche Anzahl Wellen aufweist, die in die Bohrungen eingeführt sind, und wobei sich jeweils zwischen einer Welle und ihrer Bohrung der Dämpfungsspalt befindet, der an beiden Enden durch elastische Querdichtungen verschlossen ist.

Bei dieser Dämpfungsvorrichtung ist ein Dämpfungswagen vorgesehen, der zwei gegeneinander begrenzt bewegliche Dämpferteile aufweist. Der erste Dämpferteil ist mit einem zugehörigen, auf der Führung rollend bewegbaren Wälzkörperlager und der zweite Dämpferteil mit dem zweiten Maschinenteil verbunden. Die beiden Dämpferteile liegen sich mit ihren Mantelseiten konzentrisch beabstandet gegenüber und bilden dabei zwischen sich einen Dämpfungsspalt. Die Form des Dämpfungsspaltes entspricht der Mantelform der Dämpferteile, z. B. eines hydrostatischen Lagers. In diesem Dämpfungsspalt ist das Dämpfungsmedium so angeordnet, daß es beim Betrieb der Vorrichtung nicht verloren gehen kann und daher nicht ersetzt zu werden braucht.

Bei der erfindungsgemäßen Dämpfungsvorrichtung kann vorteilhaft Dämpfungsflüssigkeit jeder Art mit einer Viskosität nach Bedarf ausgewählt werden. Dieses ist mit einem äußerst bescheidenen Aufwand möglich, da man für die Wälzkörperlager auf bekannte Technologien zurückgreifen kann. Man braucht nur die an Wälzkörperlagern anbaubaren Dämpferteile zusätzlich herzustellen. Der Dämpfungsspalt dieser erfindungsgemäßen Dämpfungsvorrichtung ist mit zwei inhaltlich identisch großen Hälften gebildet, so daß kein Ausgleichsraum für Dämpfungsmedium erforderlich ist. Es ist besonders vorteilhaft, wenn ein Dämpferteil an seiner dem Dämpfungsspalt zugewandten Seite eine gegenüber dem Dämpfungsmedium beständige Kunststoffbeschichtung aufweist. Dadurch können harte Stöße und mechanische Beschädigungen vermieden werden, wenn einmal das Dämpfungsmedium an einer Stelle des Dämpfungsspaltes ganz verdrängt werden sollte. Die erfindungsgemäße Dämpfungsvorrichtung gewährleistet eine Dämpfungswirkung in der quer zur Schienenrichtung befindlichen Ebene sowie ihre optimale richtungsbezogene Einstellung. Bei relativ großer Ausführung der Dämpfungseinheit, wie z. B. für Kugelbüchsen und Gewindespindelmuttern, ist keine Spalt-Längsleitung erforderlich, so daß eine in allen Querrichtungen gleich große Dämpfungswirkung gewährleistet ist.

Die Erfindung soll nachstehend anhand der Zeichnungen mehrerer Beispiele näher besprochen werden. Es zeigen:
- Figur 1: ein Schaubild einer Vorrichtung mit einem durch eine Schraubenspindel bewegbaren Rollführungstisch mit vier Dämpfungseinheiten;
- Figur 2: ein Schaubild einer weiteren Vorrichtung mit einem durch eine Schraubenspindel bewegbaren Rollführungstisch mit vier Dämpfungseinheiten;
- Figur 3: einen Querschnitt durch den Dämpfungswagen nach Figur 1;
- Figur 4: eine Seitenansicht des Dämpfungswagens gemäß Figur 3 mit einem Teilschnitt;
- Figur 5: eine perspektivische Darstellung eines Dämpfungswagens und eines Wälzkörperlagers der Vorrichtung nach Figur 2;
- Figur 6: einen Längsschnitt durch die Vorrichtung gemäß Figur 5;
- Figur 7: eine Draufsicht auf die Vorrichtung gemäß Figur 5;
- Figur 8: einen Querschnitt durch die Vorrichtung gemäß Figur 5;
- Figur 9: ein Detail von Dämpfungsteilen und Dichtungen;
- Figur 10: einen Detailquerschnitt der Dämpfungsteile;
- Figur 11: ein Dämpfungsteil mit drei Bohrungen;
- Figur 12: eine Ansicht mit einem Teilschnitt des Dämpfungsteils mit den Bohrungen;

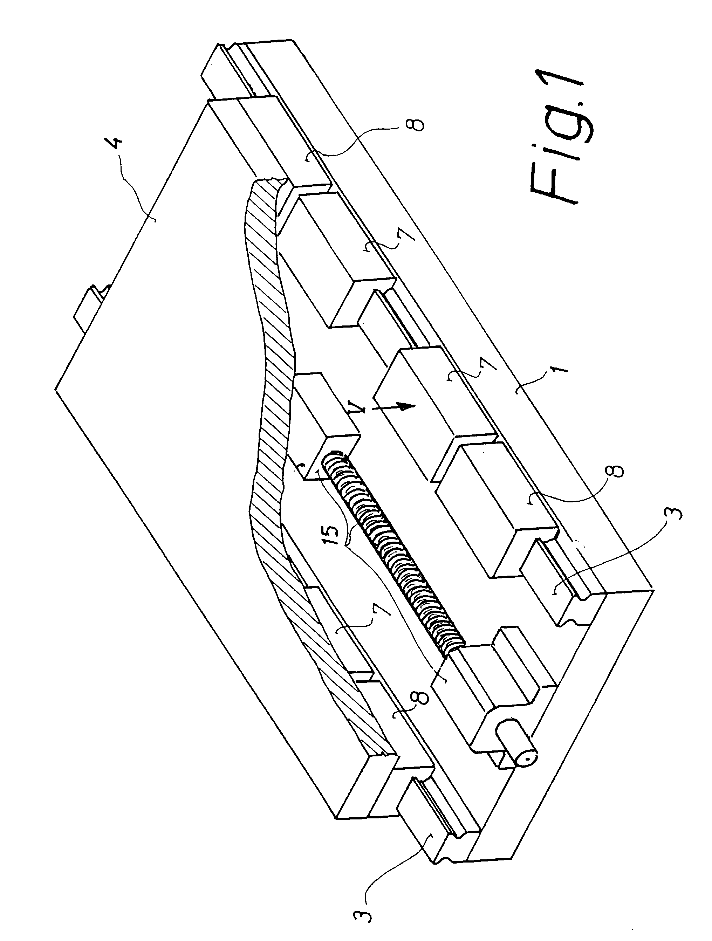

In Figur 1 ist eine komplette Führungseinheit mit einem erfindungsgemäßen Dämpfungswagen dargestellt. Auf einem Maschinengestell 1 sind zwei Führungsschienen 3 mittels nicht dargestellter Schrauben befestigt. Auf diesen Führungsschienen 3 laufen vier als Rollenumlauflager ausgebildete Führungslager 8, welche mittels nicht dargestellter Schrauben mit einem Tisch 4 verbunden sind. Der Tisch 4 ist gegenüber dem Maschinengestell 1 mittels eines Schraubenspindelantriebes 15 längs der Führungsschienen 3 verstellbar, wobei er mit seinen Führungslagern 8 auf den Führungsschienen 3 leicht und präzise rollend bewegbar ist. Zwischen den Führungslagern 8 und jeweils in ihrer Nähe, weit von Schwingungsknoten entfernt, sind je Seite zwei Dämpfungswagen 7 vorgesehen. Es können entweder nur zwei oder mehr Dämpfungswagen pro Schiene sein. Jeder Dämpfungswagen 7 rollt leichtgängig auf seinem Rollenumlauflager.

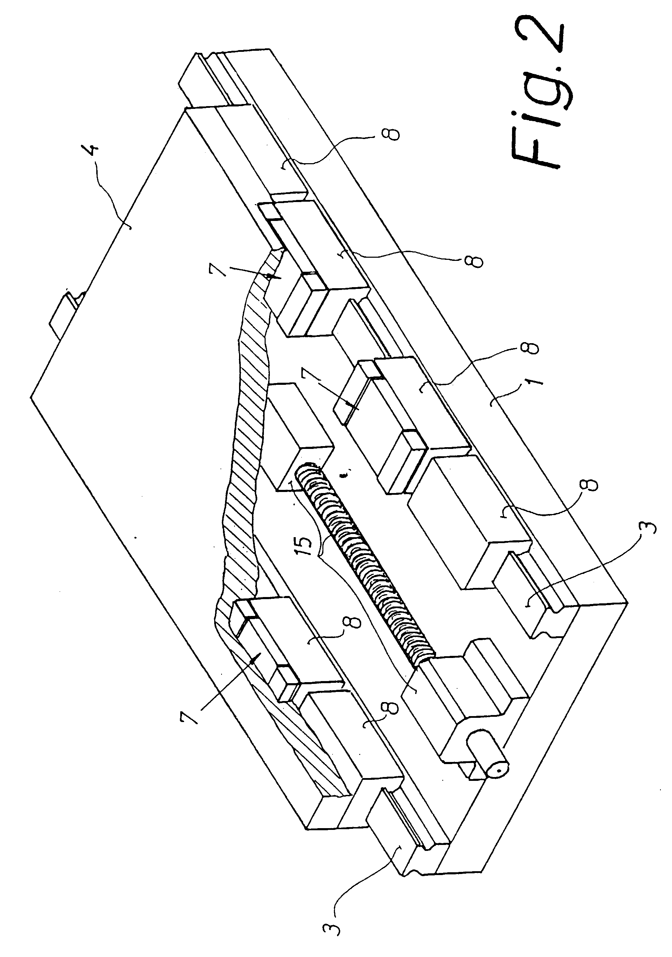

In Figur 2 ist dagegen eine komplette Führungseinheit mit der erfindungsgemäßen, auf einem tragenden Linear-Wälz-Führungslager 8 anbaubaren Dämpfungsvorrichtung 7 in flacher Ausführung dargestellt. Der mittlere Teil der Dämpfungsvorrichtung 7 ist mit dem Führungslager 8 und die beiden Endteile sind mittels nicht dargestellter Schrauben mit dem Tisch 4 verbunden. Das Bohrbild des mittleren Teils der Dämpfungsvorrichtung 7 entspricht dem standardisierten Bohrbild des Führungslagers 8.

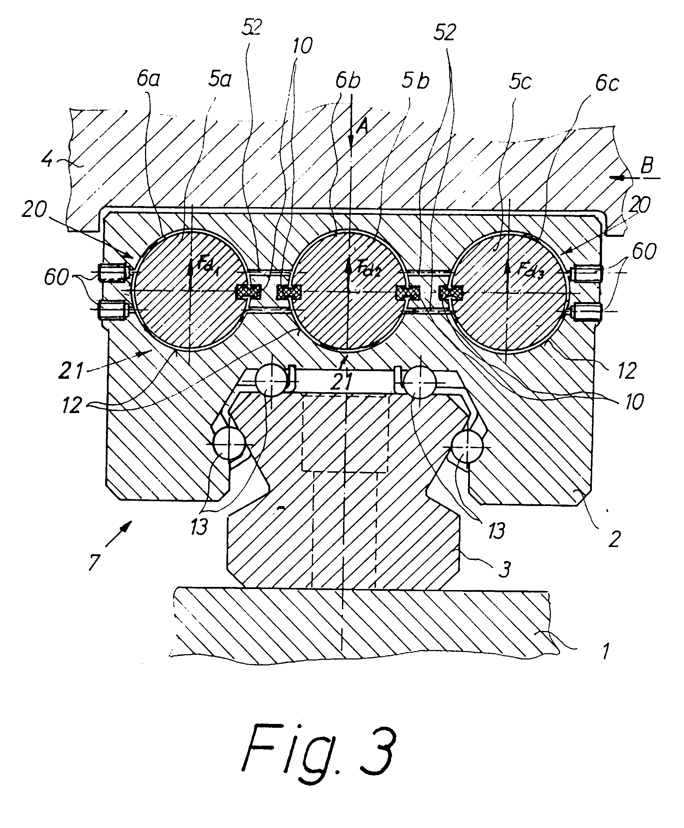

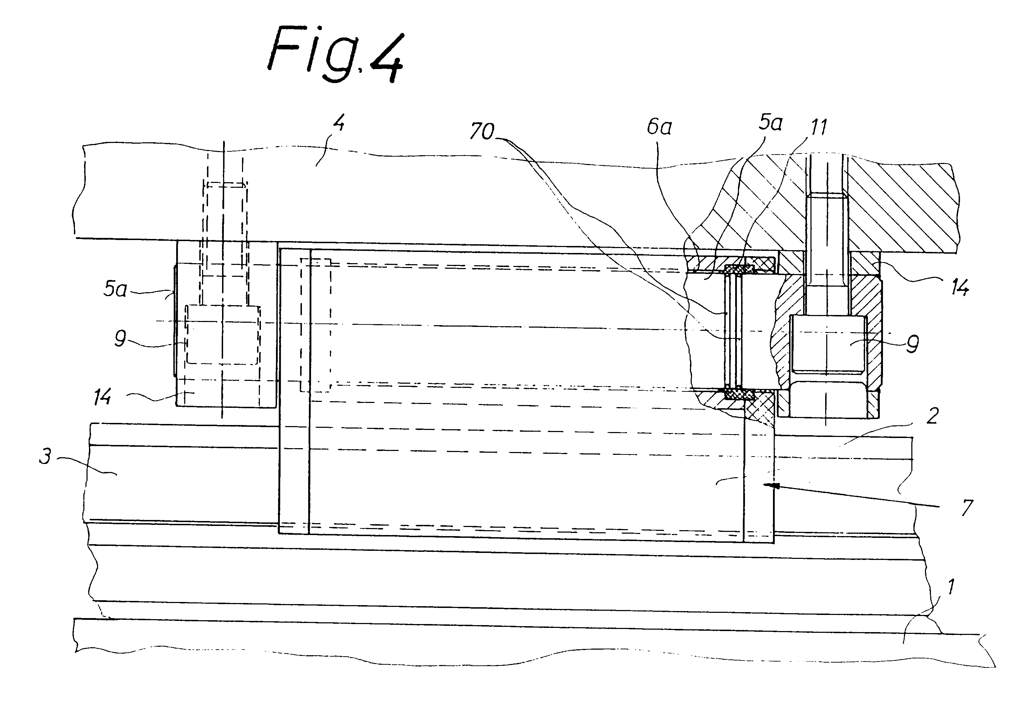

Die in den Figuren 3 und 4 gezeichnete erfindungsgemäße Lösung bietet folgende Vorteile: Es ist kein Ausgleichsraum erforderlich, sie weist eine einfache und billige Fertigung, eine einfache und billige Abdichtung des Dämpfungsraumes nach außen, vereinfachte Montage und Service und eine größere Steifigkeit des Dämpfungswagens auf. Der erste Dämpferteil 2 des Dämpfungswagens 7 ist mit einem zugehörigen, auf der Führung rollend bewegbaren Wälzkörperlager 13 und der zweite Dämpferteil 5a, 5b, 5c mit dem zweiten Maschinenteil 4 verbunden. Zwischen den Dämpferteilen 2, 5a, 5b, 5c befinden sich Dämpfungsspalte 6a, 6b, 6c. Der erste Dämpferteil 2 weist in der Schienenrichtung verlaufende Längsbohrungen 12 mit konstantem Querschnitt auf. Es kann eine beliebig Form des Querschnitts gewählt werden. Hier ist als einfachste Form der Kreiszylinder gezeichnet worden.

In den Bohrungen 12 sind die Wellen 5a, 5b, 5c des zweiten Maschinenteils eingeführt. Jede Welle 5a, 5b, 5c weist einen geringeren Durchmesser als die zugehörige Bohrung 12 auf. Es entsteht somit der Dämpfungsspalt 6a, 6b, 6c. Die Größe des Spaltes kann gemäß dem Anwendungsfall und der Viskosität der Dämpfungsflüssigkeit gewählt werden. Sie beträgt zwischen 1/100 und 4/100 mm. Die Dämpfungsflüssigkeit im Spalt muß luftfrei sein. Die beiden Endseiten des Dämpferteils zwischen der Welle 5 und der Bohrung 12 sind durch Dichtungen 1 1 (Figur 4) elastisch verschlossen. Es können zusätzlich Labyrinthkanäle 70 vorgesehen werden. Die Dämpfungsflüssigkeit ist unverlierbar gekapselt. Die Dämpfung der Schwingungen erfolgt dabei durch Verdrängung der Dämpfungsflüssigkeit (Squeeze-Film-Dämpfung). Diese Anordnung benötigt keinen Ausgleichsraum. Die Fertigungskosten bleiben gering.

Es ist bekannt, daß die Dämpfungswirkung eines relativ kleinen Zylinders gering ist. Die einfache Summe von Dämpfungswirkungen mehrerer Zylinder ist genausowenig ausreichend. Um die Dämpfungswirkung deutlich zu erhöhen, sind die Dämpfungsräume jedes Zylinders durch Längsdichtungen 10 unterteilt und miteinander mit Kanälen 52 so verbunden, daß nur ein Dämpfungsraum mit einem Oberteil 20 und einem Unterteil 21 entsteht. Diese Teile sind miteinander durch Dämpfungsspalte der äußeren Zylinder kommunizierend verbunden. Die Kommunizierungskanäle 52 dienen auch zum Füllen und Entlüften des Dämpfungsraumes. Nach Beendigung der Füllung können die Bohrungen durch Dichtschrauben 60 nach außen verschlossen werden. Die Schwingungsbewegung in der Richtung des Pfeiles A wird an jede Welle übertragen. Die Dämpfungsflüssigkeit aus dem unteren Teil des Dämpfungsraumes wird über die beiden Stirnseiten nach oben verdrängt. Es ist die Ausführung mit zwei oder drei Zylindereinheiten vorgesehen.

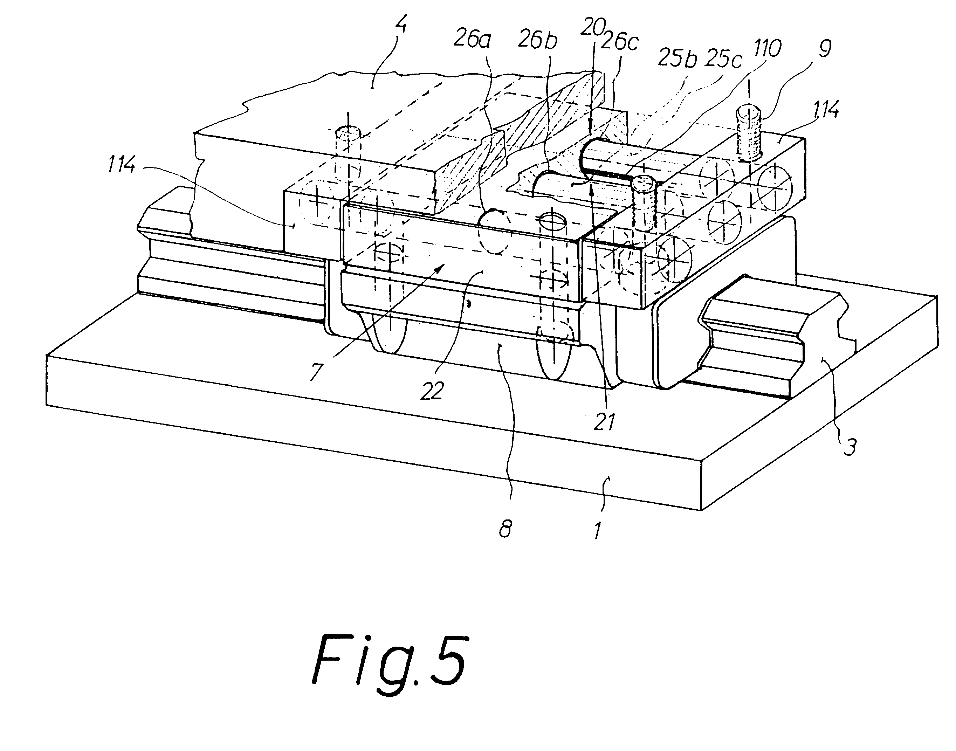

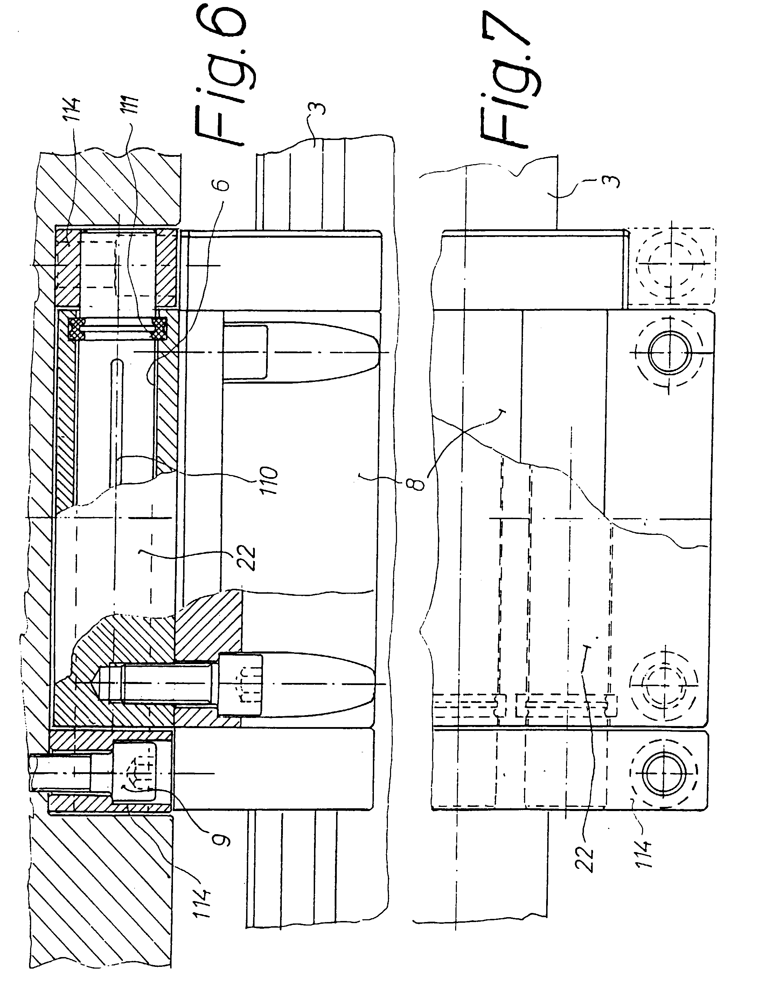

In den Figuren 5 bis 12 ist eine andere erfindungsgemäße Lösung gezeichnet. Diese Ausführung zeichnet sich durch die folgenden Vorteile aus: Es ist kein Ausgleichsraum erforderlich. Möglich sind eine einfache und billige Fertigung, die Anwendung von weicheren Materialien, eine einfache und billige Abdichtung des Dämpfungsraumes, einfache Montage und Service sowie der Einbau an allen genormten Monorails, wodurch eine größere Flexibilität in der Anwendung erzielt werden kann. Der Dämpfungsgrad kann nach der Montage in den quer zur Führungsrichtung stehenden Ebenen eingestellt werden. Der erste Dämpferteil 22 der Dämpfungsvorrichtung ist mit einem zugehörigen, auf der Führung rollend bewegbaren standardisierten Wälzkörperlager 8 über Standardgewindebohrungen verbunden, während der zweite Dämpferteil 25a, 25b, 25c mit dem zweiten Maschinenteil 4 verbunden ist. Zwischen den Dämpferteilen 22 und 25 befindet sich der jeweilige Dämpfungsspalt 26a, 26b oder 26c.

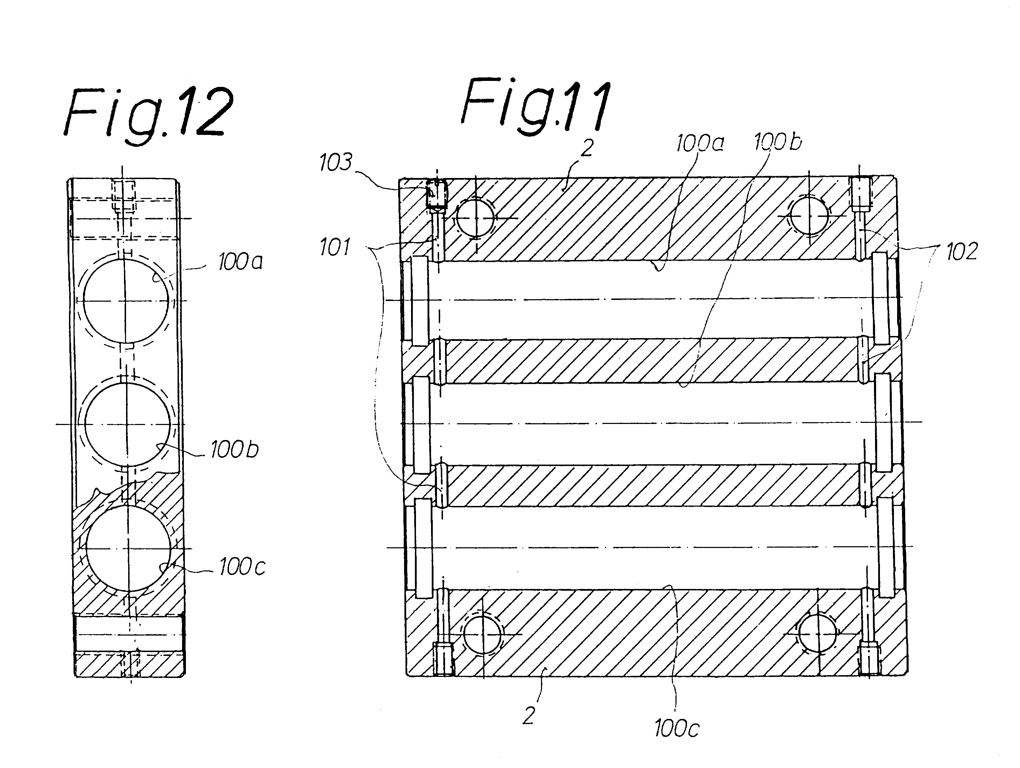

Wie die Figuren 11 und 12 zeigen, weist der erste Dämpferteil 22 in der Führungsrichtung verlaufende Längsbohrungen 100a, 100b, 100c mit konstantem Querschnitt auf. Es kann eine beliebige Form des Querschnitts verwendet werden. Hier ist als einfachste Form der Kreiszylinder vorgesehen. In den Bohrungen 100a, 100b, 100c sind Wellen 25a, 25b, 25c als Dämpferteile des zweiten Maschinenteils eingeführt. Jede Welle 25a, 25b, 25c weist einen geringeren Durchmesser als die zugehörige Bohrung 100a, 100b, 100c auf. Es wird jeweils ein Dämpfungsspalt 26a, 26b, 26c gebildet. Die Spaltgröße (Ölfilmdicke) kann gemäß dem Anwendungsfall und der Viskosität der Dämpfungsflüssigkeit gewählt werden. Für sie kann ein Maß von wenigen Mikrometern bis zu einigen hundertstel Millimetern gewählt werden. Die Dämpfungsflüssigkeit im Spalt muß luftfrei sein. Die beiden Endseiten des Dämpferteils zwischen der Welle 25a, 25b, 25c und der Bohrung 100a, 100b, 100c sind durch Dichtungen 111 elastisch verschlossen. Statt einer Dichtungsnut 111a können auch Labyrinthkanäle, die hier nicht dargestellt sind, an der Welle 25a, 25b, 25c vorgesehen werden. Die Dämpfungsflüssigkeit ist unverlierbar gekapselt. Die Dämpfung der Schwingungen erfolgt dabei durch Verdrängung der Dämpfungsflüssigkeit (Squeeze-Film-Dämpfung). Diese Anordnung und die Anordnung gemäß Figur 3 benötigen keinen Ausgleichsraum.

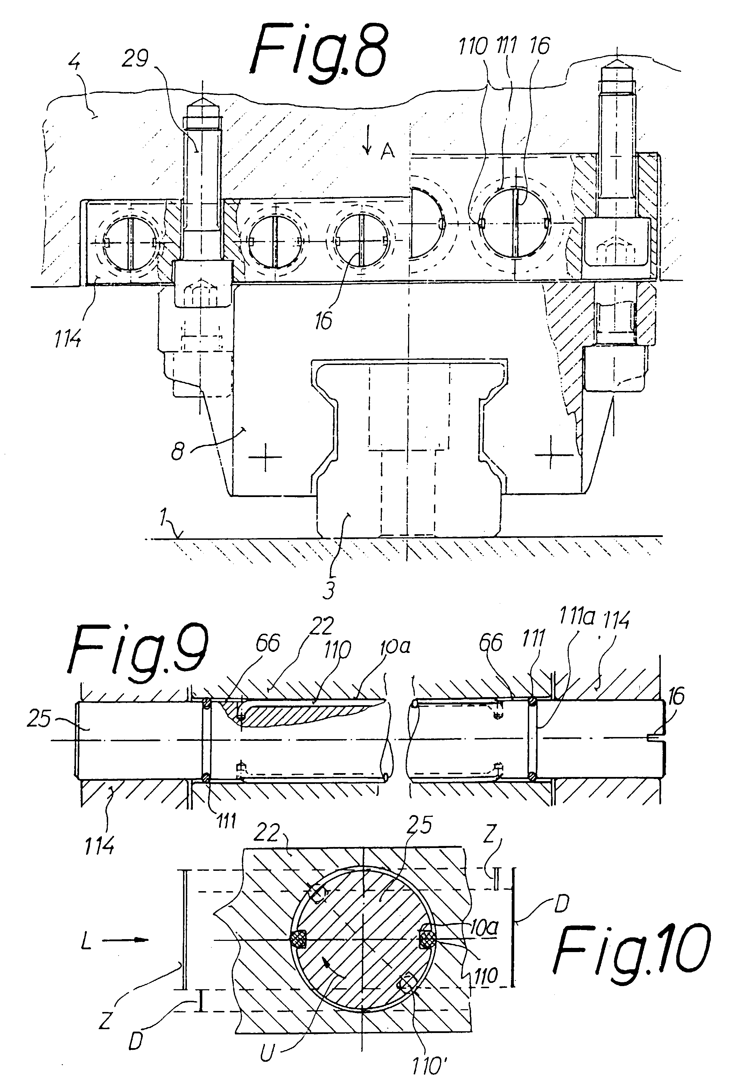

Um die Dämpfungswirkung deutlich zu erhöhen, sind erfindungsgemäß die Dämpfungsräume 26a, 26b, 26c jeder Dämpfungseinheit durch horizontal angeordnete Längsdichtungen 110 geteilt, die in Dichtungsnuten 110a der zugehörigen Welle eingebracht sind. Die Dämpfungsräume sind miteinander nur über Kanäle 101, 102 und die Randbereiche 66 (Figur 9) zwischen einer Längsdichtung 110 und einer Querdichtung 111 kommunizierend verbunden. Ein direktes kurzgeschlossenes Kommunizieren zwischen dem Oberteil 20 und dem Unterteil 21 wird somit verhindert. Bezeichnet man mit n den Quotienten zwischen der Zylinderlänge und dem Zylinderdurchmesser, so wird die Dämpfungswirkung beim Ausweichen der Flüssigkeit in der Längsrichtung um n zum Quadrat größer als die Dämpfungswirkung beim Flüssigkeitsausweichen in Richtung des Zylinderumfanges. Die Kommunizierungskanäle bzw. Bohrungen 101, 102 dienen außerdem zum Füllen und zum Entlüften des Dämpfungsraumes. Nach Beendigung der Füllung müssen die Bohrungen durch Dichtschrauben 103 verschlossen werden.

Die Dämpfungskraft in der Richtung des Pfeiles A wird an jeder Welle anteilig zerlegt. Die Dämpfungsflüssigkeit aus dem unteren Teil des Dämpfungsraumes wird über dessen beide Seiten nach oben verdrängt. Der Flüssigkeitsdruck wird parabolisch verteilt, wobei in Führungsrichtung gesehen in der Mitte der Dämpfungsvorrichtung 2, 5a, 5b, 5c der größte Wert erreicht wird. Die Größe der Dämpfungskraft in der lateralen Richtung L wird bei dieser horizontalen Dichtungslage nur als einfache Summe der einzelnen Dämpfungskräfte dargestellt. Soll diese erhöht werden, ist nur eine gewisse Drehung der Welle in Richtung U, beispielsweise nur der mittleren Welle oder der beiden seitlichen Wellen, erforderlich. Aus Figur 10 ist ersichtlich, daß dadurch die asymmetrischen Zug- und Druckräume Z und D entstehen. Ein kurzgeschlossenes Kommunizieren der ausgequetschten Dämpfungsflüssigkeit im vollen Umfang ist somit unmöglich. Die Dämpfungskraft kann aufgebaut werden. Dies erfolgt auf Kosten der Verringerung der axialen Dämpfungskraft. Stehen die Dichtungen um 45 Grad versetzt gegenüber der Horizontalen (Dichtung 110'), so wird die Dämpfungskraft in beiden Richtungen gleich groß. Die maximale Dämpfung erfolgt immer senkrecht zur Dichtungsebene und ihre Größe hängt nur noch von der Schwinggeschwindigkeit ab. Mit dieser Vorrichtung ist es also möglich, jederzeit die Dämpfung in der maximalen Amplitudenrichtung einzustellen bzw. zu ändern.

## Patentansprüche

1. Dämpfungsvorrichtung - für gegenseitig geführt bewegbare Maschinenteile (1, 4) - mit einem mit einer Führung (3) verbundenen ersten Maschinenteil (1) und mit einem zweiten Maschinenteil (4), der mit einem auf der Führung (3) rollend bewegbaren Wälzkörperlager (8) verbunden ist, wobei in einem Dämpfungswagen (7) zwei gegeneinander begrenzt bewegliche Dämpferteile (2, 5; 22, 25) vorgesehen sind, von denen der erste Dämpferteil (2; 22) mit dem vorgenannten oder einem eigens dafür vorgesehenen, auf der Führung (3) rollend bewegbaren Wälzkörperlager (13) und der zweite Dämpferteil (5; 25) mit dem zweiten Maschinenteil (4) verbunden ist, wobei die beiden Dämpferteile (2, 5; 22, 25) zwischen sich einen Dämpfungsspalt (6a, 6b, 6c; 26a, 26b, 26c) bilden, in welchem ein fließfähiges Dämpfungsmedium im Betrieb unverlierbar angeordnet ist, **dadurch gekennzeichnet,** daß der zweite Dämpferteil (5; 25) von zwei inhaltsgleich großen Hälften (20, 21) des rundum verlaufenden Dämpfungsspaltes (6a, 6b, 6c; 26a, 26b, 26c) vollständig umgeben ist, wobei der erste Dämpferteil (2; 22) mindestens zwei Bohrungen (12; 100a, 100b, 100c) und der zweite Dämpferteil (5; 25) eine gleiche Anzahl Wellen (5a, 5b, 5c; 25a, 25b, 25c) aufweist, die in die Bohrungen (12; 100a, 100b, 100c) eingeführt sind, und wobei sich jeweils zwischen einer Welle (5a, 5b, 5c; 25a, 25b, 25c) und ihrer Bohrung (12; 100a, 100b, 100c) der Dämpfungsspalt (6a, 6b, 6c; 26a, 26b, 26c) befindet, der an beiden Enden durch elastische Querdichtungen (11; 111) verschlossen ist.

2. Dämpfungsvorrichtung nach Anspruch 1, **dadurch gekennzeichnet,** daß die inhaltsgleich großen Hälften (20, 21) des Dämpfungsspaltes (6a, 6b, 6c; 26a, 26b, 26c) durch Längsdichtungen (10; 110) unterteilt sind.

3. Dämpfungsvorrichtung nach Anspruch 2, **dadurch gekennzeichnet**, daß die Lage der Hälften (20, 21) des Dämpfungsspaltes durch Drehen der Welle (5; 25), z. B. mittels eines an ihrer Stirnseite (16) angreifenden Schraubschlüssels, einstellbar ist.

4. Dämpfungsvorrichtung nach Anspruch 1, **dadurch gekennzeichnet,** daß der zwischen den beiden Dämpferteilen (2, 5; 22, 25) befindliche Dämpfungsspalt (6; 26) einen Wert von wenigen Mikrometern bis 1/10 mm einnimmt.

5. Dämpfungsvorrichtung nach Anspruch 1, **dadurch gekennzeichnet**, daß die als Querdichtungen ausgebildeten elastischen Dichtungen (11; 111) in entsprechenden Wellennuten oder Bohrungen angeordnet sind.

6. Dämpfungsvorrichtung nach Anspruch 2, **dadurch gekennzeichnet,** daß zwischen den Querdichtungen (11; 111) und den Längsdichtungen (10; 110) beidseitig kommunizierende Kanäle (66) angeordnet sind.

7. Dämpfungsvorrichtung nach Anspruch 1, **dadurch gekennzeichnet**, daß die Dämpfungsspalte (6a, 6b, 6c; 26a, 26b, 26c) mit Kanälen (52, 101, 102) verbunden sind, die zugleich als Füll- und Entlüftungskanäle für die Dämpfungsflüssigkeit dienen und beidseitig mit Verschlußschrauben (60, 103) dicht verschlossen sind.

8. Dämpfungsvorrichtung nach einem der Ansprüche 1 bis 7, **dadurch gekennzeichnet,** daß die jeweilige Querdichtung (11; 111) als Dichtring ausgebildet ist.

9. Dämpfungsvorrichtung nach einem der Ansprüche 1 bis 8, **dadurch gekennzeichnet,** daß die Wellen (5a, 5b, 5c; 25a, 25b, 25c) über ein Joch (14; 114) durch Schrauben (9; 29) mit dem zweiten Maschinenteil (4) verbunden sind.

## Revendications

1. Dispositif d'amortissement pour des pièces de machine déplaçables (1, 4) à guidage mutuel comprenant une première pièce de machine (1) reliée à un guide (3) et une deuxième pièce de machine (4) reliée à un palier à corps roulants (8) qui peut se déplacer en roulant sur le guide (3), il étant prévu dans un chariot d'amortissement (7), deux éléments amortisseurs (2, 5; 22, 25) à déplacement relatif limité dont le premier élément amortisseur (2; 22) est relié soit audit palier à corps roulants (8) ou à un autre palier à corps roulants (13) spécialement fourni à cette fin et qui peut également se déplacer en roulant sur le guide (3), alors que le deuxième élément amortisseur (5; 25) est relié à la deuxième piéce de machine (4) et qu'il se forme entre les deux éléments amortisseurs (1, 5; 22; 25), un intervalle d'amortissement (6a, 6b, 6c; 26a, 26b, 26c) dans lequel est agencé de manière imperdable au fonctionnement, un milieu coulant d'amortissement, **caractérisé en ce que** le deuxième élément amortisseur (5;25) est complètement entouré par deux moitiés (20, 21) du même contenu de l'intervalle d'amortissement (6a, 6b, 6c; 26a, 26b, 26c) qui s'étend à la ronde, le premier élément amortisseur (2; 22) comprenant au moins deux alésages (12; 100a, 100b, 100c) et le deuxième élément amortisseur (5; 25) comprenant un même nombre d'arbres (5a, 5b, 5c; 25a, 25b, 25c) qui sont insérés dans lesdits alésages (12; 100a, 100b, 100c) alors que l'intervalle d'amortissement (6a, 6b, 6c; 26a, 26b, 26c) qui est obturé à ses deux extrémités par des joints élastiques transversaux (11; 111) se trouve entre chaque arbre (5a, 5b, 5c; 25a, 25b, 25c) et son alésage (12; 100a, 100b, 110c).

2. Dispositif d'amortissement selon la revendication 1, **caractérisé en ce que** les deux moitiés (20, 21) du même contenu de l'intervalle d'amortissement (6a, 6b, 6c; 26a, 26b, 26c) sont séparées par des joints d'étanchéité longitudinaux (10; 110).

3. Dispositif d'amortissement selon la revendication 2, **caractérisé en ce que** la position des moitiés (20, 21) de l'intervalle d'amortissement peut être ajustée par rotation de l'arbre (5; 25), p. e. par une clé à vis appliquée à son côté frontal (16).

4. Dispositif d'amortissement selon la revendication 1, **caractérisé en ce que** l'intervalle d'amortissement (6; 26) situé entre les deux éléments amortisseurs (2, 5; 22,25) a une dimension comprise entre quelques micromètres et 1/10 mm.

5. Dispositif d'amortissement selon la revendication 1, **caractérisé en ce que** les joints élastiques (11; 111) configurés sous la forme de joints transversaux sont agencés dans des rainures correspondantes des arbres ou dans des alésages.

6. Dispositif d'amortissement selon la revendication 2, **caractérisé en ce que** des canaux de communication (66) sont agencés entre les joints transversaux (11; 111) et les joints longitudinaux (10;110) sur les deux extrémités.

7. Dispositif d'amortissement selon la revendication 1, **caractérisé en ce que** les intervalles d'amortissement (6a, 6b, 6c; 26a, 26b, 26c) sont reliés à des canaux (52, 101, 102) qui servent en même temps de canaux de remplissage et de dégorgement d'air pour le liquide d'amortissement et qui sont obturés de manière étanche des deux côtés par des vis d'obturation (60, 103).

8. Dispositif d'amortissement selon l'une des revendications 1 à 7, **caractérisé en ce que** les joints transversaux (11; 111) sont configurés sous la forme des anneaux d'étanchéité.

9. Dispositif d'amortissement selon l'une des revendications 1 à 8, **caractérisé en ce que** les arbres (5a, 5b, 5c; 25a, 25b, 25c) sont reliés à la deuxième pièce de machine (4) par l'intermédiaire d'une traverse (14; 114) et de vis (9; 29).

## Claims

1. Damping device for mutually guided displaceable machine elements (1, 4) comprising a first machine element (1) connected to a guide (3) and a second machine element (4) connected to a rolling bearing (8) which is displaceable by rolling on the guide (3), two damping elements (2, 5; 22, 25) being disposed for limited relative displacement in a damping carriage (7), the first of which damping elements (2; 22) is connected to said rolling bearing (8) or to a specially provided rolling bearing (13) which is likewise displaceable by rolling on the guide (3), while the second damping element (5; 25) is connected to the second machine element (4), and a damping gap (6a, 6b, 6c; 26a, 26b, 26c) in which a free-flowing damping medium is arranged so as to be safe against loss during operation is formed between the two damping elements (2, 5; 22, 25), **characterized in that** the second damping element (5;25) is completely surrounded by two halves (20, 21) of equal content of the round about extending damping gap (6a, 6b, 6c; 26a, 26b, 26c), the first damping element (2; 22) comprises at least two bores (12; 100a, 100b, 100c) and the second damping element (5; 25) comprises the same number of shafts (5a, 5b, 5c; 25a, 25b, 25c) which are inserted into said bores (12; 100a, 100b, 100c), and the damping gap (6a, 6b, 6c; 26a, 26b, 26c) which is sealed at both ends by elastic transverse seals (11; 111) is formed between each shaft (5a, 5b, 5c; 25a, 25b, 25c) and the respective bore (12; 100a, 100b, 100c).

2. Damping device according to Claim 1, **characterized in that** the two halves (20, 21) of equal content of the damping gap (6a, 6b, 6c; 26a, 26b, 26c) are separated by longitudinal seals (10; 110).

3. Damping device according to Claim 2, **characterized in that** the position of the two halves (20, 21) of the damping gap can be adjusted by rotating the shaft (5; 25), for example by means of a wrench applied to its front end (16).

4. Damping device according to Claim 1, **characterized in that** the damping gap (6; 26) situated between the two damping elements ( 2, 5; 22, 25) has a value ranging from a few micrometers to 1/10 mm.

5. Damping device according to Claim 1, **characterized in that** the elastic seals configured as transverse seals (11; 111) are arranged in corresponding grooves of the shafts or in bores.

6. Damping device according to Claim 2, **characterized in that** communicating channels (66) are arranged between the transverse seals (11; 111) and the longitudinal seals (10; 110) on both ends.

7. Damping device according to Claim 1, **characterized in that** the damping gaps (6a, 6b, 6c; 26a, 26b, 26c) are connected to channels (52, 101, 102) that serve at the same time as filling and dearating channels for the damping liquid while being sealed in leak-proof manner at both ends by sealing screws (60, 103).

8. Damping device according to one of the Claims 1 to 7, **characterized in that** the transverse seals (11; 111) are configured as sealing rings.

9. Damping device according to one of the Claims 1 to 8, **characterized in that** the shafts (5a, 5b, 5c; 25a, 25b, 25c) are connected to the second machine element (4) by means of a crossbar (14; 114) and screws (9; 29).
